# EUROPÄISCHE PATENTSCHRIFT

(11) **EP 3 746 835 B1**
(45) Veröffentlichungstag und Bekanntmachung des Hinweises auf die Patenterteilung: **03.01.2024**
(21) Anmeldenummer: 18769128.2
(22) Anmeldetag: 07.09.2018
(51) Int. Cl.: G02B 27/01, B60R 11/02

(54) **VERFAHREN ZUM BETREIBEN WENIGSTENS EINER ELEKTRONISCHEN DATENBRILLE IN EINEM KRAFTFAHRZEUG UND ANZEIGEVORRICHTUNG FÜR EIN KRAFTFAHRZEUG**
METHOD FOR OPERATING AT LEAST ONE PAIR OF ELECTRONIC AUGMENTED REALITY GLASSES IN A MOTOR VEHICLE, AND DISPLAY DEVICE FOR A MOTOR VEHICE
PROCÉDÉ DE FONCTIONNEMENT D'AU MOINS UNE PAIRE DE LUNETTES INTELLIGENTES ÉLECTRONIQUES DANS UN VÉHICULE AUTOMOBILE ET DISPOSITIF D'AFFICHAGE POUR UN VÉHICULE AUTOMOBILE

(30) Priorität: 01.02.2018 DE 102018201523
(43) Veröffentlichungstag der Anmeldung: 09.12.2020
(73) Patentinhaber: Audi AG, 85045 Ingolstadt (DE)
(72) Erfinder: KÜHNE, Marcus, 92339 Beilngries (DE)
(74) Vertreter: Hofstetter, Schurack & Partner
(86) Internationale Anmeldenummer: PCT/EP2018/074168
(87) Internationale Veröffentlichungsnummer: WO 2019/149389

(56) Entgegenhaltungen:
- EP-A1- 3 079 041
- DE-A1-102014 019 579
- DE-A1-102014 221 337
- DE-A1-102015 003 948
- DE-C1- 10 156 219
- Anonymous: "Use advanced search in Video Manager - YouTube Help", , 20 September 2015 (2015-09-20), XP055683829, INTERNET Retrieved from the Internet: URL:https://web.archive.org/web/2015092001 4816/https://support.google.com/youtube/an swer/2685977?hl=en [retrieved on 2020-04-07]

## Beschreibung

Die Erfindung betrifft ein Verfahren zum Betreiben wenigstens einer elektronischen Datenbrille in einem Kraftfahrzeug und eine Anzeigevorrichtung für ein Kraftfahrzeug. Des Weiteren betrifft die Erfindung auch ein Kraftfahrzeug mit einer solchen Anzeigevorrichtung.

Die Unterhaltung von Fahrzeuginsassen, insbesondere mittels verschiedener medialer Inhalte, wird unter anderem aufgrund der sehr wahrscheinlich zukünftigen Verbreitung von autonom fahrenden Fahrzeugen einen immer größeren Stellenwert einnehmen. Zur Unterhaltung von Fahrzeuginsassen gibt es schon vielfältige Ansätze.

So zeigt die DE 10 2014 011 278 A1 ein Verfahren zur Überbrückung eines Zeitraums während eines autonomen Fahrens eines Kraftfahrzeugs. Ein Fahrer des Kraftfahrzeugs kann während einer autonomen Fahrt ein Computerspiel spielen, wobei unter anderem ein Lenkrad, ein Gaspedal und eine Bremse des Kraftfahrzeugs als Eingabeelemente für das Computerspiel benutzt werden können.

Die DE 10 2014 219 223 A1 zeigt ein autonomes Kraftfahrzeug mit einem Unterhaltungssystem. Mittels des Unterhaltssystems kann ein Medieninhalt für Fahrzeuginsassen auf eine Projektionsfläche projiziert werden.

Die DE 10 2014 220 001 A1 zeigt ein Verfahren, bei welchem während eines autonomen Fahrbetriebs eines Kraftfahrzeugs ein Medieninhalt wiedergegeben wird. Wenn der autonome Fahrbetrieb unterbrochen wird, so wird auch die Wiedergabe des Medieninhalts abgebrochen.

In der DE 10 2014 221 337 A1 wird auf Basis von gesammelten Daten bestimmt, ob eine Grenze, die mit Reisekrankheit in Verbindung steht, überschritten wird, woraufhin eine Komponente in einem Fahrzeug zumindest zum Teil auf Basis der gesammelten Daten justiert werden kann. Ferner ist offenbart, dass Sitze, Spiegel, Klimaanlagen, Videoanzeigen und möglicherweise andere Elemente des Fahrzeugs als Komponenten einbezogen werden, die einer Justierung unterzogen werden, um die Reisekrankeit zu lindern. Ferner ist offenbart, dass in einem Video, das beispielsweise Fliegen, schnelles Fahren in einem Auto, Aussichten von hohen Gebäuden, und so weiter zeigt, bestimmt werden kann, dass es möglicherweise Reisekrankheit verursacht oder zu dieser beiträgt. Wenn von einer Bewegung und/oder anderen Bildern und/oder Phänomenen in den gepufferten Videodaten bestimmt wird, dass sie möglicherweise zu Reisekrankheit beitragen, hält der Computer das abgespielte Video an. Ferner kann ein Benutzer gefragt werden, ob ein Teil des Videos, der wahrscheinlich zur Reisekrankheit beiträgt, gänzlich übersprungen werden soll, oder ein Videoteil, der wahrscheinlich zur Reisekrankheit beiträgt, weggelassen werden soll.

Die DE 10 2014 019 579 A1 zeigt ein System zum Betreiben einer Anzeigeeinrichtung zur Nutzung in einem Kraftfahrzeug. Dabei umfasst das System einen Darstellungsbereich der Anzeigeeinrichtung, in welchem erste und zweite Bilddaten unabhängig voneinander dargestellt sind. Des Weiteren umfasst das System eine Erfassungseinrichtung, welche dazu ausgebildet ist, eine Bewegung des Kraftfahrzeugs zu erfassen, wobei die Erfassungseinrichtung über eine Steuereinrichtung mit der Anzeigeeinrichtung gekoppelt ist. Ferner ist die Steuereinrichtung dazu ausgebildet, ein Signal der Erfassungseinrichtung zu empfangen und in Abhängigkeit von dem Signal die ersten Bilddaten innerhalb des Darstellungsbereichs dynamisch darzustellen. Schließlich ist gezeigt, dass nicht nur aktuelle Bewegungsdaten, sondern auch zukünftige Bewegungsdaten des Kraftfahrzeugs ermittelbar sind. Liegt beispielsweise ein sehr bewegungsreicher oder turbulenter Streckenabschnitt auf einer zukünftigen Route vor, so kann dies beispielsweise durch die Anzeigeeinrichtung vor Erreichen des Streckenabschnitts angezeigt werden, und ein Nutzer der Anzeigeeinrichtung vorab gewarnt werden, beispielsweise in Form eines Symbols, welches im Darstellungsbereich der Anzeigeeinrichtung angezeigt werden kann.

Es ist die Aufgabe der vorliegenden Erfindung, eine Lösung bereitzustellen, mittels welcher besonders realistisch anmutende Unterhaltungsangebote mittels wenigstens einer elektronischen Datenbrille in einem Kraftfahrzeug wiedergegeben werden können.

Diese Aufgabe wird durch ein Verfahren zum Betreiben wenigstens einer elektronischen Datenbrille in einem Kraftfahrzeug sowie durch eine Anzeigevorrichtung für ein Kraftfahrzeug mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben wenigstens einer elektronischen Datenbrille in einem Kraftfahrzeug werden mehrere unterschiedliche Unterhaltungsangebote, welche mittels der elektronischen Datenbrille wiedergebbar sind, bereitgestellt. Bei den Unterhaltungsangeboten kann es sich beispielsweise um virtuelle Experiences handeln, bei denen man sich in einem zur Fahrbewegung des Kraftfahrzeugs passenden Kontext bewegt. So kann man beispielsweise virtuell über eine Planetenoberfläche fliegen. Fährt das Kraftfahrzeug eine Kurve, so wird diese Bewegung auch in der angezeigten virtuellen Welt, also während des Flugs über die Planetenoberfläche, wiedergegeben, sodass die auf den Träger der elektronischen Datenbrille wirkenden realen Kräfte mit dem virtuell Erlebten übereinstimmen. Genauso können die Unterhaltungsangebote auch Filme oder dergleichen umfassen.

Der Erfindung liegt die Erkenntnis zugrunde, dass diese unterschiedlichen Unterhaltungsangebote beziehungsweise Unterhaltungsformate bei unterschiedlichen Streckencharakteristika mal besser und mal schlechter funktionieren. Beispielsweise wird sich eine virtuelle Raumschlacht zum Beispiel auf einer kurvigen Bergstrecke natürlicher beziehungsweise authentischer anfühlen als auf einer langgezogenen und ebenen Autobahnstrecke. Will man hingegen einen Kinofilm in einem virtuellen Kino mittels der elektronischen Datenbrille schauen, wäre eher eine langgestreckte kurvenarme und ebene Strecke gegebenenfalls vorteilhaft.

Bei dem erfindungsgemäßen Verfahren ist es daher vorgesehen, zu analysieren, wie gut eine Streckenführung einer bevorstehenden Strecke zu einem Ziel und/oder wie gut die jeweilige Streckenführung eines Straßennetzes im Umfeld des Kraftfahrzeugs zu den bereitgestellten Unterhaltungsangeboten passen. Für eine bevorstehende Strecke, oder falls diese nicht bekannt sein sollte, für eine umliegende Verkehrsnetzcharakteristik geeignete Unterhaltungsangebote können so besonders gut herausgefiltert und angeboten werden. Unter der Streckenführung ist insbesondere zu verstehen, wie kurvig und hügelig eine bestimmte Strecke beziehungsweise ein Straßennetz ist.

Nachdem die Analyse erfolgt ist, wie gut eine Streckenführung der bevorstehenden Strecke zu einem Ziel und/oder wie gut jeweilige Streckenführungen des betreffenden Straßennetzes im Umfeld des Kraftfahrzeuges zu den bereitgestellten Unterhaltungsangeboten passen, werden die Unterhaltungsangebote in Abhängigkeit von der Analyse zur Wiedergabe mit der elektronischen Datenbrille angeboten.

Beispielsweise kann die elektronischen Datenbrille direkt oder auch das Kraftfahrzeug mit einem fahrzeuginternen oder fahrzeugexternen Navigationssystem verbunden sein. Auf diese Weise ist es möglich, die Streckenführung der bevorstehenden Strecke und/oder jeweilige Streckenführungen des Straßennetzes im Umfeld des Kraftfahrzeugs zu analysieren und mit den bereitgestellten Unterhaltungsangeboten abzugleichen. Ist aus der Analyse beispielsweise ersichtlich, dass das Kraftfahrzeug zur Erreichung eines bestimmten Ziels eine sehr kurvige und hügelige Strecke fahren wird, so werden diejenigen Unterhaltungsangebote als besonders gut passend bewertet, bei welchen ein besonders starkes Auf und Ab und Seitwärtsbewegungen vorteilhaft wären. Wird hingegen festgestellt, dass die vorstehende Strecke beispielsweise entlang einer sehr ebenen Fläche verläuft und zudem sehr wenige Kurven aufweist, so werden diejenigen Unterhaltungsangebote als besonders passend bewertet, bei welchen weniger Auf- und Abbewegungen und weniger Seitwärtsbewegungen vorteilhaft wären.

Der Benutzer der elektronischen Datenbrille bekommt entweder direkt mittels der elektronischen Datenbrille, genauer mittels entsprechender Anzeigemittel der elektronischen Datenbrille, oder bei abgesetzter elektronischer Datenbrille beispielsweise über eine fahrzeugseitige Anzeigeeinrichtung das Analyseergebnis präsentiert, indem die Unterhaltungsangebote in Abhängigkeit von der Analyse entsprechend angezeigt werden. Der Benutzer der elektronischen Datenbrille kann also noch bevor er seine Strecke zum Ziel abfährt und/oder eine Strecke entlang des Straßennetzes im Umfeld des Kraftfahrzeugs abfährt, ganz klar erkennen, wie gut die verschiedenen zur Verfügung stehenden Unterhaltungsangebote zu der von ihm und/oder von einem Navigationssystem geplanten Route passen. Infolgedessen kann der Benutzer der elektronischen Datenbrille die zur Streckenführung am besten passenden Unterhaltungsangebote beziehungsweise das am besten passende Unterhaltungsangebot auswählen. Dadurch ergibt sich eine besonders realistisch anmutende Wahrnehmung der betreffenden Unterhaltungsangebote bei aufgesetzter elektronischer Datenbrille im Kraftfahrzeug, da mit den Augen und dem Gleichgewichtssinn wahrgenommene Reize sehr gut übereinstimmen. Dadurch kann neben dem reinen Genuss der dadurch besonders realistisch anmutenden Unterhaltungsangebote auch verhindert werden, dass dem Träger der elektronischen Datenbrille übel wird. Denn die beschriebenen Vorgehensweise verhindert auch die sogenannte Simulator und Motion Sickness.

Eine vorteilhafte Ausführungsform der Erfindung sieht vor, dass das Anbieten der Unterhaltungsangebote dadurch erfolgt, dass ein jeweiliges Ergebnis der Analyse zugeordnet zu den angebotenen Unterhaltungsformen angezeigt wird. Beispielsweise kann eine Bewertungspunktzahl oder dergleichen neben den jeweiligen zur Verfügung gestellten Unterhaltungsangeboten eingeblendet werden. So kann der Benutzer der elektronischen Datenbrille auf einfache Weise das Analyseergebnis erkennen und - sofern er denn möchte - beispielsweise das am besten bewertete beziehungsweise am besten analysierte Unterhaltungsangebot auswählen.

Eine weitere vorteilhafte Ausführungsform der Erfindung sieht vor, dass das Anbieten der Unterhaltungsangebote dadurch erfolgt, dass die Unterhaltungsangebote entsprechend ihres jeweiligen Ergebnisses der Analyse in einer Reihenfolge, vorzugsweise absteigend beginnend vom besten Ergebnis der Analyse, sortiert angezeigt werden. Auf diese Weise kann der Benutzer der elektronischen Datenbrille auf besonders einfache Weise erkennen, welches der angebotenen Unterhaltungsangebote am besten zur vor ihm liegenden Strecke passt. An sich ist es auch möglich, dass nach der Analyse, wie gut die Streckenführung der bevorstehenden Strecke zum Ziel und/oder wie gut jeweilige Streckenführungen des Straßennetzes im Umfeld des Kraftfahrzeugs zu den bereitgestellten Unterhaltungsangeboten passen, diejenigen Unterhaltungsangebote herausgefiltert und gar nicht angeboten werden, bei welchen anhand des Analyseergebnisses klar ist, dass die Übereinstimmung zwischen den betreffenden Unterhaltungsangeboten und den jeweiligen Streckenführungen so schlecht ist, dass dies zu einer besonders schlechten Userexperience führen würde. In diesem Zusammenhang ist es auch möglich, dass der Benutzer der elektronischen Datenbrille auswählen kann, ob er diese Filterfunktion haben möchte oder stattdessen lieber doch alle grundsätzlich möglichen Unterhaltungsangebote angezeigt bekommen möchte.

In weiterer vorteilhafter Ausgestaltung der Erfindung ist es vorgesehen, dass eine Dauer zum Ziel ermittelt und die Unterhaltungsangebote in Abhängigkeit von der ermittelten Dauer zur Wiedergabe mit der elektronischen Datenbrille angeboten werden. Ist beispielsweise anhand der Benutzereingabe klar, dass er nur 15 bis 20 Minuten fahren wird, so kann er beispielsweise bevorzugt entsprechend kurze Unterhaltungsformate beziehungsweise Unterhaltungsangebote zuerst oder überhaupt angezeigt beziehungsweise angeboten bekommen. Ist hingegen klar, dass der Benutzer eine sehr lange Strecke fahren wird, beispielsweise zwei oder mehr Stunden unterwegs sein wird, so können auch bevorzugt solche Unterhaltungsangebote zur Auswahl durch den Benutzer angezeigt werden, welche eine ebenso lange Dauer aufweisen. In Kenntnis der Dauer zum Ziel können also beispielsweise diejenigen Unterhaltungsangebote vorgefiltert werden, welche hinsichtlich ihrer Länge der Darbietung besonders geeignet sind, da sie mit der Dauer zum Ziel eine besonders große Übereinstimmung aufweisen.

Gemäß einer weiteren vorteilhaften Ausführungsform der Erfindung ist es vorgesehen, dass abgefragt wird, wie lange ein Benutzer der elektronischen Datenbrille unterhalten werden möchte, und die Unterhaltungsangebote in Abhängigkeit von einer angegebenen Unterhaltungsdauer zur Wiedergabe mittels der elektronischen Datenbrille angeboten werden. So kann es beispielsweise sein, dass der Benutzer der elektronischen Datenbrille gar nicht vor hat, die gesamte Fahrzeit für den Genuss beziehungsweise Konsum von Unterhaltungsangeboten zu nutzen. In dem Fall kann es besonders vorteilhaft sein, wenn der Benutzer der elektronischen Datenbrille einfach angeben kann, wie lange er überhaupt unterhalten werden möchte, wobei passend dazu die entsprechenden Unterhaltungsangebote zur Auswahl bereitgestellt werden. So kann es beispielsweise sein, dass der Benutzer der elektronischen Datenbrille weiß, dass er während der Fahrt auch noch geschäftliche Telefonate führen möchte, sodass er lediglich für die dann noch verbleibende Zeitdauer eines der Unterhaltungsangebote nutzen mag. In einem solchen Fall kann es sehr vorteilhaft sein, wenn die zur Auswahl angebotenen Unterhaltungsangebote auch mit der geplanten Nutzungsdauer möglichst gut übereinstimmen.

In weiterer vorteilhafter Ausgestaltung der Erfindung ist es vorgesehen, dass, falls die angegebene Unterhaltungsdauer kürzer als eine Fahrdauer mit dem Kraftfahrzeug ist, ein am besten geeigneter Abschnitt einer befahrenen Strecke zur Wiedergabe von einem der Unterhaltungsangebote ausgewählt wird.

An dieser Stelle kann dann wiederum die zuvor bereits erwähnte Analyse greifen, mittels welcher ermittelt wird, wie gut beispielsweise die Streckenführung der bevorstehenden Strecke zu einem Ziel passt, um dann den am besten geeigneten Abschnitt der befahrenen Strecke zur Wiedergabe von einem der Unterhaltungsangebote auszuwählen. So kann beispielsweise der Streckenabschnitt ausgewählt werden, welcher besonders hügelig ist und auch eine besonders kurvige Streckenführung aufweist, wenn dies besonders gut zu einem der Unterhaltungsangebote passen sollte. Ein umgekehrtes Vorgehen ist natürlich auch möglich, sodass beispielsweise ein Abschnitt der Strecke gewählt wird, welcher besonders wenige Kurven aufweist, wenn dies besonders gut zu einem der Unterhaltungsangebote passen sollte.

Die erfindungsgemäße Anzeigevorrichtung für ein Kraftfahrzeug umfasst wenigstens eine elektronische Datenbrille zum Wiedergeben unterschiedlicher Unterhaltungsangebote sowie eine Steuereinrichtung, welche dazu eingerichtet ist, die Unterhaltungsangebote bereitzustellen und zu analysieren, wie gut eine Streckenführung einer bevorstehenden Strecke zu einem Ziel und/oder wie gut die jeweiligen Streckenführungen eines Straßennetzes im Umfeld des Kraftfahrzeugs zu den bereitgestellten Unterhaltungsangeboten passen, sowie die Unterhaltungsangebote in Abhängigkeit von der Analyse zur Wiedergabe mit der elektronischen Datenbrille anzubieten. Die Steuereinrichtung kann dabei Teil der elektronischen Datenbrille oder auch beispielsweise Teil eines Infotainmentsystems des Kraftfahrzeugs sein. So ist es beispielsweise möglich, dass die elektronische Datenbrille über eine geeignete Kommunikationsschnittstelle verfügt, über welche unterschiedliche Unterhaltungsangebote beispielsweise von einem fahrzeugexternen Server heruntergeladen und somit bereitgestellt werden können. Genauso gut ist es auch möglich, dass das Kraftfahrzeug eine geeignete Kommunikationsschnittstelle aufweist, über welche unterschiedliche Unterhaltungsangebote heruntergeladen oder zur Auswahl bereitgestellt werden können. Vorteilhafte Ausgestaltungen dieses erfindungsgemäßen Verfahrens sind als vorteilhafte Ausgestaltungen der erfindungsgemäßen Anzeigevorrichtung und umgekehrt anzusehen, wobei die Anzeigevorrichtung insbesondere Mittel zur Durchführung der Verfahrensschritte aufweist.

Eine vorteilhafte Ausführungsform der Anzeigevorrichtung sieht vor, dass die elektronische Datenbrille eine Virtual Reality Brille oder eine Augmented Reality Brille ist. In ersterem Fall kann der Benutzer der elektronischen Datenbrille vollständig in virtuelle Welten während der Fahrt mit dem Kraftfahrzeug abtauchen, da er durch die Virtual Reality Brille visuell vollständig von seiner realen Umgebung abgeschottet wird. Falls die elektronische Datenbrille eine Augmented Reality Brille ist, kann der Benutzer der elektronischen Datenbrille die reale Umwelt noch sehen, wobei die Augmented Reality Brille diese mit zusätzlichen virtuellen Inhalten überlagert. Diese Überlagerung der Realität mit virtuellen Inhalten hängt dann von dem durch den Benutzer gewählten Unterhaltungsangebot ab. Es ist auch denkbar, dass die wenigstens eine elektronische Datenbrille dazu ausgebildet ist, sowohl als Virtual Reality Brille als auch als Augmented Reality Brille zu fungieren, also eine Art Hybrid darstellt.

Das erfindungsgemäße Kraftfahrzeug umfasst die erfindungsgemäße Anzeigevorrichtung oder eine vorteilhafte Ausführungsform der erfindungsgemäßen Anzeigevorrichtung.

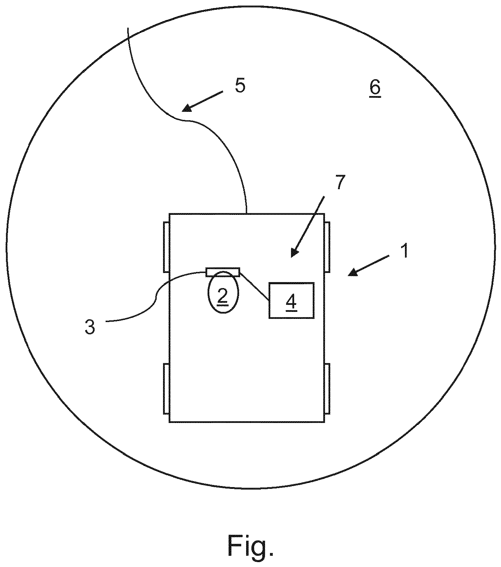

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine stark schematisierte Darstellung eines Kraftfahrzeugs, in welchem ein Benutzer sitzt, der eine elektronische Datenbrille trägt, mittels welcher unterschiedlichste Unterhaltungsangebote während der Fahrt mit dem Kraftfahrzeug wiedergegeben werden können.

Ein Kraftfahrzeug 1 ist in einer stark schematisierten Darstellung in der einzigen Figur gezeigt. In dem Kraftfahrzeug 1 sitzt ein Fahrzeuginsasse 2, der eine elektronische Datenbrille 3, beispielsweise in Form einer Virtual Reality Brille oder auch in Form einer Augmented Reality Brille, aufgesetzt hat. Zudem ist noch eine Steuereinrichtung 4 schematisch angedeutet, welche dazu eingerichtet ist, unterschiedlichste Unterhaltungsangebote bereitzustellen und zu analysieren, wie gut eine Streckenführung einer bevorstehenden Strecke 5 zu einem Ziel und/oder wie gut jeweilige Streckenführungen eines Straßennetzes im Umfeld 6 des Kraftfahrzeugs 1 zu bereitgestellten Unterhaltungsangeboten passen, sowie die Unterhaltungsangebote in Abhängigkeit von der Analyse zur Wiedergabe mit der elektronischen Datenbrille 2 anzubieten.

Die Steuereinrichtung 4 kann beispielsweise Bestandteil der elektronischen Datenbrille 2 sein. Genauso gut ist es auch möglich, dass die Steuereinrichtung 4 Teil eines fahrzeugseitigen Infotainmentsystems des Kraftfahrzeugs 1 ist.

Falls es sich bei dem Fahrzeuginsassen 2 beispielsweise um den Fahrer des Kraftfahrzeugs 1 handelt, kann er die elektronische Datenbrille 3 insbesondere dann zu Unterhaltungszwecken nutzen, wenn das Kraftfahrzeug 1 gerade vollautonom fährt. Vor Fahrtantritt oder zumindest vor Nutzung der elektronischen Datenbrille 3 werden dem Fahrzeuginsassen 2 mittels der Steuereinrichtung 4 unterschiedliche Unterhaltungsangebote bereitgestellt, welche mittels der elektronischen Datenbrille 3 wiedergegeben werden können. Die Steuereinrichtung 4 analysiert, wie gut die Streckenführung der bevorstehenden Strecke 5 zu einem bestimmten Ziel zu den bereitgestellten Unterhaltungsangeboten passt. Hat der Fahrzeuginsasse 2 beispielsweise zuvor ein bestimmtes Ziel, wie beispielsweise einen Arbeitsweg oder dergleichen, eingegeben, so kann zum Beispiel ein hier nicht dargestelltes Navigationssystem des Kraftfahrzeugs 1 die entsprechende Strecke 5 zur Zielerreichung ermitteln und Informationen über die Streckenführung der Strecke 5 an die Steuereinrichtung 4 übermitteln. Diese kann dann wiederum analysieren, wie gut die Streckenführung der bevorstehenden Strecke 5 zu unterschiedlichsten, zur Verfügung stehenden Unterhaltungsangeboten, wie beispielsweise virtuellen Computerspielen, Kinofilmen und dergleichen passt.

Für den Fall, dass die konkrete Strecke 5 überhaupt noch nicht feststehen sollte, ist es auch möglich, dass die Steuereinrichtung 4 analysiert, wie gut jeweilige Streckenführungen eines hier nicht näher dargestellten Straßennetzes im Umfeld 6 des Kraftfahrzeugs 1 zu den bereitgestellten Unterhaltungsangeboten passen. So oder so werden die bereitgestellten Unterhaltungsangebote in Abhängigkeit von der Analyse zur Wiedergabe mit der elektronischen Datenbrille 3 angeboten.

Das Anbieten der Unterhaltungsangebote kann beispielsweise dadurch erfolgen, dass ein jeweiliges Ergebnis der Analyse zugeordnet zu den angebotenen Unterhaltungsformen angezeigt wird. Besonders gut kann der Fahrzeuginsasse 2 erkennen, welche der zur Verfügung stehenden Unterhaltungsangebote besonders gut beispielsweise zur Streckenführung der Strecke 5 passen, wenn die Unterhaltungsangebote entsprechend ihres jeweiligen Ergebnisses der zuvor genannten Analyse in einer ganz bestimmten Reihenfolge, vorzugsweise absteigend beginnend vom besten Ergebnis der Analyse, sortiert angezeigt werden. Diese Anzeige kann beispielsweise mittels der elektronischen Datenbrille 3 und/oder mittels einer Anzeigeeinrichtung im Kraftfahrzeug 1, beispielsweise mittels eines Displays im Bereich einer Mittelkonsole oder dergleichen, erfolgen.

Der Fahrzeuginsasse 2 kann also ganz einfach erkennen, welche der grundsätzlich zur Verfügung stehenden Unterhaltungsangebote am besten beispielsweise zum Streckenverlauf der noch vor ihm liegenden Strecke 5 passen. Nachdem der Fahrzeuginsasse 2 eines der zur Verfügung stehenden und angebotenen Unterhaltungsangebote ausgewählt hat, kann er sich beispielsweise entspannt zurücklehnen, während das Kraftfahrzeug 1 vollautonom die Strecke 5 entlang fährt und der Fahrzeuginsasse 2 mittels der elektronischen Datenbrille 3 das von ihm gerade ausgewählte Unterhaltungsangebot wiedergegeben bekommt.

Zum Beispiel ist es denkbar, dass das Kraftfahrzeug 1 vollautonom eine sehr hügelige und kurvige Strecke 5 befährt. Passend dazu wurde dem Fahrzeuginsassen 2 dasjenige Unterhaltungsangebot angeboten, welches am besten zu einer besonders kurvigen und hügeligen Streckenführung passt, beispielsweise weil es sich bei dem Unterhaltungsangebot um eine virtuelle Raumschlacht handelt, bei welcher der Fahrzeuginsasse 2 bei aufgesetzter elektronischer Datenbrille 3 viele virtuelle Auf- und Abbewegungen sowie Seitwärtsbewegungen vollführt, weil er beispielsweise mit seinem virtuellem Raumgleiter die besagte Raumschlacht vollführt. Dadurch, dass die Streckenführung der Strecke 5 besonders gut zur virtuellen Erfahrung passt, welche mittels des ausgewählten Unterhaltungsangebots wiedergegeben wird, ergibt sich eine besonders realistische Anmutung, beispielsweise eines Computerspiels in Form der virtuellen Raumschlacht, wenn diese mittels der elektronischen Datenbrille 3 wiedergegeben wird.

Zudem ist es auch möglich, dass eine Dauer zum Ziel ermittelt und die Unterhaltungsangebote in Abhängigkeit von der ermittelten Dauer zur Wiedergabe mit der elektronischen Datenbrille 3 angeboten werden. Ist so beispielsweise klar, dass der Fahrzeuginsasse 2 nur wenige Minuten bis zur Zielerreichung im Kraftfahrzeug 1 verbringen wird, so werden bevorzugt diejenigen Unterhaltungsangebote beispielsweise in einer Auflistung zuoberst beziehungsweise zuerst angezeigt, welche keine besonders lange Unterhaltungsdauer an sich benötigen.

Zudem ist es auch möglich, dass abgefragt wird, wie lange der Fahrzeuginsasse 2 überhaupt unterhalten werden möchte, wobei die Unterhaltungsangebote in Abhängigkeit von der angegebenen Unterhaltungsdauer zur Wiedergabe mit der elektronischen Datenbrille 3 angeboten werden. So ist es beispielsweise auch möglich, dass der Fahrzeuginsasse 2 von vornherein - also noch vor Fahrtantritt - weiß, dass er gar nicht die gesamte Fahrzeit dafür verwenden möchte, sich mittels der elektronischen Datenbrille 3 unterhalten zu lassen, beispielsweise weil er während der Fahrt noch andere Dinge, wie beispielsweise Telefonate oder dergleichen erledigen möchte. In dem Fall ist es besonders vorteilhaft, wenn abgefragt wird, wie lange der Fahrzeuginsasse 2 überhaupt mittels der elektronischen Datenbrille 3 unterhalten werden möchte. Abgestimmt auf diese Abfrage können dann diejenigen Unterhaltungsangebote bevorzugt, beispielsweise optisch markiert oder anderweitig gekennzeichnet, angeboten werden, sodass der Fahrzeuginsasse 2 von vornherein gar nicht in die Verlegenheit gerät, viel zu lange Unterhaltungsangebote auszuwählen.

Zudem ist es auch möglich, dass, falls die angegebene Unterhaltungsdauer, welche von dem Fahrzeuginsassen 2 gewünscht wird, kürzer als eine vorhergesagte Fahrtdauer entlang der Strecke 5 zu einem bestimmten Ziel ist, ein am besten geeigneter Abschnitt der befahrenen Strecke 5 zur Wiedergabe von einem der Unterhaltungsangebote ausgewählt wird. So ist es beispielsweise bei einer längeren Fahrt insbesondere denkbar, dass die Strecke 5 zum Beispiel zunächst entlang einer Autobahn verläuft, welche weniger Kurven und ein sehr flaches Profil aufweist, wohingegen während eines mittleren Abschnitts der Strecke 5 beispielsweise ein Bergpass überfahren wird, welcher eine Serpentinenstrecke umfasst. Sollte beispielsweise ein ganz bestimmtes Unterhaltungsangebot besonders gut zu dieser Serpentinenstrecke passen, so wird die elektronische Datenbrille 3 so angesteuert, dass sobald die Serpentinenstrecke beginnt, das passende Unterhaltungsangebot eingespielt wird.

Die elektronische Datenbrille 2 und die Steuereinrichtung 4 bilden gemeinsam eine Anzeigevorrichtung 7 für das Kraftfahrzeug 1. Mittels dieser Anzeigevorrichtung 7 ist es in der erläuterten Weise möglich, die für bestimmte Streckenführungen besonders geeigneten Unterhaltungsangebote, welche mittels der elektronischen Datenbrille 3 wiedergegeben werden können, so aufbereitet dem Fahrzeuginsassen 2 anzubieten, dass dieser direkt erkennen kann, welche der an sich zur Verfügung stehenden Unterhaltungsangebote besonders gut zu jeweiligen Streckenführungen noch zu befahrender Strecken 5 passen. Infolgedessen können sowohl virtuelle als auch augmentierte Inhalte besonders realistisch während der Fahrt mit dem Kraftfahrzeug 1 wiedergegeben werden.

## Patentansprüche

1. Verfahren zum Betreiben wenigstens einer elektronischen Datenbrille (3) in einem Kraftfahrzeug (1), mit den Schritten:
- Bereitstellen mehrerer unterschiedlicher Unterhaltungsangebote, welche mittels der elektronischen Datenbrille (3) wiedergebbar sind;
- Analysieren, wie gut eine Streckenführung einer bevorstehenden Strecke (5) zu einem Ziel und/oder wie gut jeweilige Streckenführungen eines Straßennetzes im Umfeld (6) des Kraftfahrzeugs (1) zu den bereitgestellten Unterhaltungsangeboten passen;
- Anbieten der Unterhaltungsangebote in Abhängigkeit von der Analyse zur Wiedergabe mit der elektronischen Datenbrille (3), wobei das Anbieten der Unterhaltungsangebote dadurch erfolgt, dass ein jeweiliges Ergebnis der Analyse zugeordnet zu den angebotenen Unterhaltungsformen angezeigt wird;
wobei abgefragt wird, wie lange ein Benutzer (2) der elektronischen Datenbrille (3) unterhalten werden möchte, und die Unterhaltungsangebote in Abhängigkeit von einer angegebenen Unterhaltungsdauer zur Wiedergabe mit der elektronischen Datenbrille (3) angeboten werden, wobei die zur Auswahl angebotenen Unterhaltungsangebote mit der geplanten Nutzungsdauer möglichst gut übereinstimmen;
wobei, falls die angegebene Unterhaltungsdauer kürzer als eine Fahrdauer mit dem Kraftfahrzeug (1) ist, ein hinsichtlich der Streckenführung am besten geeigneter Abschnitt einer befahrenen Strecke (5) zur Wiedergabe von einem der Unterhaltungsangebote ausgewählt wird; wobei die Unterhaltungsangebote virtuelle Experiences sind, bei denen der Benutzer (2) sich in einem zu einer Fahrbewegung des Kraftfahrzeugs passenden Kontext bewegt, sodass die auf den Träger der elektronischen Datenbrille (3) wirkenden realen Kräfte mit dem virtuell Erlebten übereinstimmen;
wobei die Streckenführung der bevorstehenden Strecke (5) und/oder die jeweiligen Streckenführungen des Straßennetzes im Umfeld (6) des Kraftfahrzeugs (1) analysiert werden und mit den bereitgestellten Unterhaltungsangeboten abgeglichen werden, indem sich die elektronische Datenbrille direkt oder auch das Kraftfahrzeug mit einem fahrzeuginternen oder fahrzeugexternen Navigationsgerät verbindet;
wobei, für den Fall, dass die Strecke (5) zunächst entlang einer Autobahn verläuft, welche weniger Kurven und ein sehr flaches Profil aufweist, wohingegen während eines mittleren Abschnitts der Strecke (5) ein Bergpass überfahren wird, welcher eine Serpentinenstrecke umfasst und ein bestimmtes Unterhaltungsangebot besonders gut zu dieser Serpentinenstrecke passt, die elektronische Datenbrille (3) so angesteuert wird, dass, sobald die Serpentinenstrecke beginnt, das passende Unterhaltungsangebot eingespielt wird.

2. Verfahren nach Anspruch 1,
**dadurch gekennzeichnet, dass**
das Anbieten der Unterhaltungsangebote dadurch erfolgt, dass die Unterhaltungsangebote entsprechend ihres jeweiligen Ergebnisses der Analyse in einer Reihenfolge, vorzugsweise absteigend beginnend vom besten Ergebnis der Analyse, sortiert angezeigt werden.

3. Verfahren nach einem der vorhergehenden Ansprüche,
**dadurch gekennzeichnet, dass**
eine Dauer zum Ziel ermittelt und die Unterhaltungsangebote in Abhängigkeit von der ermittelten Dauer zur Wiedergabe mit der elektronischen Datenbrille (3) angeboten werden.

4. Anzeigevorrichtung (7) für ein Kraftfahrzeug (1), umfassend
- wenigstens eine elektronische Datenbrille (3) zum Wiedergeben unterschiedlicher Unterhaltungsangebote;
- eine Steuereinrichtung (4), welche dazu eingerichtet ist, die Unterhaltungsangebote bereitzustellen und zu analysieren, wie gut eine Streckenführung einer bevorstehenden Strecke (5) zu einem Ziel und/oder wie gut jeweilige Streckenführungen eines Straßennetzes im Umfeld des Kraftfahrzeugs (1) zu den bereitgestellten Unterhaltungsangeboten passen, sowie die Unterhaltungsangebote in Abhängigkeit von der Analyse zur Wiedergabe mit der elektronischen Datenbrille (3) anzubieten, indem sie ein jeweiliges Ergebnis der Analyse zuordnet und zu den angebotenen Unterhaltungsformen anzeigt, abzufragen, wie lange ein Benutzer (2) der elektronischen Datenbrille (3) unterhalten werden möchte, und die Unterhaltungsangebote in Abhängigkeit von einer angegebenen Unterhaltungsdauer zur Wiedergabe mit der elektronischen Datenbrille (3) anzubieten, wobei die zur Auswahl angebotenen Unterhaltungsangebote mit der geplanten Nutzungsdauer möglichst gut übereinstimmen; und falls die angegebene Unterhaltungsdauer kürzer als eine Fahrdauer mit dem Kraftfahrzeug (1) ist, einen hinsichtlich der Streckenführung am besten geeigneten Abschnitt einer befahrenen Strecke (5) zur Wiedergabe von einem der Unterhaltungsangebote auszuwählen;
wobei die Unterhaltungsangebote virtuelle Experiences sind, bei denen der Benutzer (2) sich in einem zu einer Fahrbewegung des Kraftfahrzeugs passenden Kontext bewegt, sodass die auf den Träger der elektronischen Datenbrille (3) wirkenden realen Kräfte mit dem virtuell Erlebten übereinstimmen;
wobei die Steuereinrichtung (4) ferner dazu eingerichtet ist, die Streckenführung der bevorstehenden Strecke (5) und/oder die jeweiligen Streckenführungen des Straßennetzes im Umfeld (6) des Kraftfahrzeugs (1) zu analysieren und mit den bereitgestellten Unterhaltungsangeboten abzugleichen, indem die elektronische Datenbrille direkt oder auch das Kraftfahrzeug mit einem fahrzeuginternen oder fahrzeugexternen Navigationsgerät verbunden ist,
wobei die Steuereinrichtung (4) ferner dazu eingerichtet ist, für den Fall, dass die Strecke (5) zunächst entlang einer Autobahn verläuft, welche weniger Kurven und ein sehr flaches Profil aufweist, wohingegen während eines mittleren Abschnitts der Strecke (5) ein Bergpass überfahren wird, welcher eine Serpentinenstrecke umfasst und ein bestimmtes Unterhaltungsangebot besonders gut zu dieser Serpentinenstrecke passt, die elektronische Datenbrille (3) so anzusteuern, dass, sobald die Serpentinenstrecke beginnt, das passende Unterhaltungsangebot eingespielt wird.

5. Anzeigevorrichtung (7) nach Anspruch 4,
**dadurch gekennzeichnet, dass**
die elektronische Datenbrille (3) eine Virtual-Reality-Brille oder eine Augmented-Reality-Brille ist.

6. Kraftfahrzeug (1) mit einer Anzeigevorrichtung (7) nach einem der Ansprüche 4 oder 5.

## Claims

1. A method for operating at least one pair of electronic data goggles (3) in a motor vehicle (1), comprising the steps:
- providing multiple different entertainment offers, which can be rendered by means of the electronic data goggles (3);
- analyzing how well a routing of an upcoming route (5) to a destination and/or how well respective routings of a road network in the environment (6) of the motor vehicle (1) match the provided entertainment offers;
- offering the entertainment offers for rendering with the electronic data goggles (3) depending on the analysis, wherein offering the entertainment offers is effected in that a respective result of the analysis is displayed associated with the offered entertainment forms;
wherein it is queried how long a user (2) of the electronic data goggles (3) wishes to be entertained, and the entertainment offers are offered depending on a specified entertainment duration for rendering with the electronic data goggles (3), wherein the entertainment offers offered for choice conform to the planned use duration as well as possible;
wherein, if the specified entertainment duration is shorter than a travel duration with the motor vehicle (1), a section of a traveled route (5) best suitable with respect to the routing is selected for rendering one of the entertainment offers;
wherein the entertainment offers are virtual experiences, in which the user (2) moves in a context matching a drive movement of the motor vehicle such that the real forces acting on the wearer of the electronic data goggles (3) conform to the virtual experience;
wherein the routing of the upcoming route (5) and/or the respective routings of the road network in the environment (6) of the motor vehicle (1) are analyzed and correlated with the provided entertainment offers in that the electronic data goggles directly or also the motor vehicle connect to a navigation device internal to vehicle or external to vehicle;
wherein, in case that the route (5) first runs along a highway, which has less curves and a very flat profile, whereas a mountain pass, which includes a serpentine route, is traveled during a middle section of the route (5), and a certain entertainment offer particularly well matches this serpentine route, the electronic data goggles (3) are controlled such that, as soon as the serpentine route begins, the matching entertainment offer is played.

2. The method according to claim 1,
**characterized in that**
offering the entertainment offers is effected **in that** the entertainment offers are displayed sorted in an order corresponding to their respective result of the analysis, preferably descending beginning from the best result of the analysis.

3. The method according to any one of the preceding claims, **characterized in that**
a duration to the destination is ascertained and the entertainment offers are offered for rendering with the electronic data goggles (3) depending on the ascertained duration.

4. A display device (7) for a motor vehicle (1) comprising
- at least one pair of electronic data goggles (3) for rendering different entertainment offers;
- a control device (4), which is configured to provide the entertainment offers and to analyze how well a routing of an upcoming route (5) to a destination and/or how well respective routings of a road network in the environment of the motor vehicle (1) match the provided entertainment offers, as well as to offer the entertainment offers for rendering with the electronic data goggles (3) depending on the analysis in that it associates a respective result of the analysis and displays it to the offered entertainment forms, to query how long a user (2) of the electronic data goggles (3) wishes to be entertained, and to offer the entertainment offers for rendering with the electronic data goggles (3) depending on a specified entertainment duration, wherein the entertainment offers offered for choice conform to the planned use duration as well as possible; and if the specified entertainment duration is shorter than a travel duration with the motor vehicle (1), to select a section of a traveled route (5) best suitable with respect to the routing for rendering one of the entertainment offers;
wherein the entertainment offers are virtual experiences, in which the user (2) moves in a context matching a drive movement of the motor vehicle, such that the real forces acting on the wearer of the electronic data goggles (3) conform to the virtual experience;
wherein the control device (4) is further configured to analyze the routing of the upcoming route (5) and/or the respective routings of the road network in the environment (6) of the motor vehicle (1) and to correlate them with the provided entertainment offers in that the electronic data goggles directly or also the motor vehicle are connected to a navigation device internal to vehicle or external to vehicle,
wherein the control device (4) is further configured, in case that the route (5) first runs along a highway, which has less curves and a very flat profile, whereas a mountain pass is traversed, which includes a serpentine route, during a middle section of the route (5), and a certain entertainment offer particularly well matches this serpentine route, to control the electronic data goggles (3) such that, as soon as the serpentine route begins, the matching entertainment offer is played.

5. The display device (7) according to claim 4,
**characterized in that**
the electronic data goggles (3) are virtual-reality goggles or augmented-reality goggles.

6. A motor vehicle (1) with a display device (7) according to any one of claims 4 or 5.

## Revendications

1. Procédé pour faire fonctionner au moins une paire de lunettes intelligentes électroniques (3) dans un véhicule à moteur (1), comportant les étapes consistant à :
- fournir plusieurs offres de divertissement différentes qui peuvent être diffusées au moyen des lunettes intelligentes électroniques (3) ;
- analyser dans quelle mesure un itinéraire d'un prochain trajet (5) jusqu'à une destination et/ou dans quelle mesure des itinéraires respectifs d'un réseau routier aux abords (6) du véhicule à moteur (1) sont adaptés aux offres de divertissement fournies ;
- proposer les offres de divertissement en fonction de l'analyse en vue de la diffusion au moyen des lunettes intelligentes électroniques (3), les offres de divertissement étant proposées de manière à associer un résultat respectif de l'analyse aux formes de divertissement proposées ;
demander la durée pendant laquelle un utilisateur (2) des lunettes intelligente électroniques (3) souhaiterait être diverti et proposer les offres de divertissement en vue de la diffusion avec les lunettes intelligentes électroniques (3) en fonction d'une durée de divertissement spécifiée, les offres de divertissement proposées à la sélection correspondant le plus possible à la durée d'utilisation prévue ;
sélectionner, si la durée de divertissement spécifiée est inférieure à une durée de parcours avec le véhicule à moteur (1), un tronçon d'un trajet (5) parcouru le plus approprié en termes d'itinéraire en vue de la diffusion de l'une des offres de divertissement ;
les offres de divertissement étant des expériences virtuelles au cours desquelles l'utilisateur (2) se déplace dans un contexte adapté à un déplacement du véhicule à moteur, de sorte que les forces réelles agissant sur le porteur des lunettes intelligentes électroniques (3) correspondent à l'expérience virtuelle ;
l'itinéraire du prochain trajet (5) et/ou les itinéraires respectifs du réseau routier aux abords (6) du véhicule à moteur (1) étant analysés et comparés aux offres de divertissement fournies en connectant directement les lunettes intelligentes électroniques ou bien le véhicule à moteur à un appareil de navigation interne ou externe au véhicule ;
dans le cas où le trajet (5) longe tout d'abord une autoroute présentant peu de courbes et un profil très plat, alors que, sur un tronçon médian du trajet (5), un col de montagne incluant une route sinueuse est franchi et qu'une offre de divertissement spécifique est particulièrement bien adaptée à ce trajet sinueux, commander les lunettes intelligentes électroniques (3) de manière à diffuser, dès que le trajet sinueux débute, l'offre de divertissement adaptée.

2. Procédé selon la revendication 1,
**caractérisé en ce que**
les offres de divertissement sont proposées de telle sorte que les offres de divertissement sont affichées de manière triée selon un certain ordre en fonction de leur résultat respectif de l'analyse, en commençant de préférence par le meilleur résultat de l'analyse et dans un ordre décroissant.

3. Procédé selon l'une des revendications précédentes,
**caractérisé en ce que**
une durée jusqu'à la destination est déterminée et les offres de divertissement sont proposées en vue de la diffusion avec les lunettes intelligentes électroniques (3) en fonction de la durée déterminée.

4. Dispositif d'affichage (7) pour un véhicule à moteur (1), comprenant :
- au moins une paire de lunettes intelligentes électroniques (3) en vue de la diffusion de différentes offres de divertissement ;
- un dispositif de commande (4) configuré pour fournir les offres de divertissement et analyser dans quelle mesure un itinéraire d'un prochain trajet (5) jusqu'à une destination et/ou dans quelle mesure des itinéraires respectifs d'un réseau routier aux abords du véhicule à moteur (1) sont adaptés aux offres de divertissement fournies, ainsi que pour proposer les offres de divertissement en fonction de l'analyse en vue de la diffusion avec les lunettes intelligentes électroniques (3), en associant un résultat respectif de l'analyse et en affichant des formes de divertissement proposées, demander la durée pendant laquelle un utilisateur (2) des lunettes intelligentes électroniques (3) souhaiterait être diverti, et proposer les offres de divertissement en vue de la diffusion avec des lunettes intelligentes électroniques (3) en fonction d'une durée de divertissement spécifiée, les offres de divertissement proposées à la sélection correspondant le plus possible à la durée d'utilisation prévue ; et si la durée de divertissement spécifiée est inférieure à une durée de parcours avec le véhicule à moteur (1), sélectionner un tronçon d'un itinéraire (5) le plus approprié en termes d'itinéraire en vue de la diffusion de l'une des offres de divertissement ;
les offres de divertissement étant des expériences virtuelles au cours desquelles l'utilisateur (2) se déplace dans un contexte adapté à un déplacement du véhicule à moteur, de sorte que les forces réelles agissant sur le porteur des lunettes intelligentes électroniques (3) correspondent à l'expérience virtuelle ;
le dispositif de commande (4) étant en outre configuré pour analyser l'itinéraire du prochain trajet (5) et/ou les itinéraires respectifs du réseau routier aux abords (6) du véhicule à moteur (1) et pour les comparer aux offres de divertissement fournies, en connectant les lunettes intelligentes électroniques directement ou bien le véhicule à moteur à un appareil de navigation interne ou externe au véhicule ;
le dispositif de commande (4) étant en outre configuré pour, dans le cas où l'itinéraire (5) longe tout d'abord une autoroute présentant peu de courbes et un profil très plat, alors que, sur un tronçon médian de l'itinéraire (5), un col de montagne incluant un trajet sinueux est franchi et qu'une offre de divertissement spécifique est particulièrement bien adaptée à ce trajet sinueux, commander les lunettes intelligentes électroniques (3) de manière à diffuser, dès que le trajet sinueux débute, l'offre de divertissement adaptée.

5. Dispositif d'affichage (7) selon la revendication 4,
**caractérisé en ce que**
les lunettes intelligentes électroniques (3) sont des lunettes de réalité virtuelle ou des lunettes de réalité augmentée.

6. Véhicule à moteur (1) comportant un dispositif d'affichage (7) selon l'une des revendications 4 ou 5.
